(19) Europäisches Patentamt / European Patent Office / Office européen des brevets

(11) **EP 4 350 459 B1**

(12) **EUROPEAN PATENT SPECIFICATION**

(45) Date of publication and mention of the grant of the patent:
**18.03.2026 Bulletin 2026/12**

(21) Application number: **22815368.0**

(22) Date of filing: **02.06.2022**

(51) International Patent Classification (IPC):
**G05D 1/242** (2024.01)   **G05D 1/661** (2024.01)
**G05D 109/10** (2024.01)   **G05D 111/10** (2024.01)

(52) Cooperative Patent Classification (CPC):
**G05D 1/242; G05D 1/661;** G05D 2109/10;
G05D 2111/17; Y02T 10/70; Y02T 10/7072;
Y02T 90/12

(86) International application number:
**PCT/CN2022/096963**

(87) International publication number:
**WO 2022/253329 (08.12.2022 Gazette 2022/49)**

(54) **POSITIONING CONTROL METHOD AND APPARATUS, AND AUTONOMOUS CHARGING CONTROL APPARATUS, METHOD, AND SYSTEM**

POSITIONIERUNGSSTEUERUNGSVERFAHREN UND -VORRICHTUNG SOWIE STEUERUNGSVORRICHTUNG, -VERFAHREN UND -SYSTEM FÜR AUTONOMES LADEN

PROCÉDÉ ET APPAREIL DE COMMANDE DE POSITIONNEMENT, ET APPAREIL, PROCÉDÉ ET SYSTÈME DE COMMANDE DE CHARGE AUTONOME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2021 CN 202110627634**

(43) Date of publication of application:
**10.04.2024 Bulletin 2024/15**

(73) Proprietor: **Nuctech Company Limited**
**TongFang Building**
**Shuangqinglu**
**Haidian District**
**Beijing 100084 (CN)**

(72) Inventors:
• **CUI, Jin**
  **Beijing 100084 (CN)**
• **LV, Yanqiu**
  **Beijing 100084 (CN)**
• **TAN, Yang**
  **Beijing 100084 (CN)**
• **ZHANG, Haitao**
  **Beijing 100084 (CN)**

(74) Representative: **Cabinet Beau de Loménie**
**103, rue de Grenelle**
**75340 Paris Cedex 07 (FR)**

(56) References cited:
CN-A- 110 824 491     CN-A- 111 133 336
CN-A- 111 324 121     CN-A- 112 230 664
CN-A- 112 327 842     CN-A- 112 327 842
CN-A- 112 363 500     CN-A- 112 363 500
US-A1- 2018 364 717   US-A1- 2020 150 676
US-A1- 2021 089 040

• OPROMOLLA ROBERTO ET AL: "Pose Estimation for Spacecraft Relative Navigation Using Model-Based Algorithms", IEEE TRANSACTIONS ON AEROSPACE AND ELECTRONIC SYSTEMS, IEEE SERVICE CENTER, PISCATAWAY, NJ, US, vol. 53, no. 1, 1 February 2017 (2017-02-01), pages 431 - 447, XP011646995, ISSN: 0018-9251, [retrieved on 20170419], DOI: 10.1109/TAES.2017.2650785

# EP 4 350 459 B1

**Description**

## TECHNICAL FIELD

The present disclosure relates to the field of positioning, and more particularly, to a positioning control method, a positioning control apparatus, an autonomous charging control apparatus, an autonomous charging control method, and an autonomous charging system using automatic positioning technology.

## BACKGROUND

In recent years, a movable electric device such as a sweeper, a robot, an electric vehicle, and the like has been provided with an autonomous charging function. That is, the movable electric device may recognize a position of a charging apparatus, and may move autonomously to a charging position for charging. In order to perform autonomous charging, it is necessary to locate the position of the charging apparatus. In addition to autonomous charging scenarios, there are other application scenarios in which it is necessary to locate a position of a target device with respect to a movable device.

In conventional technologies, there are two main types of positioning technologies. One type of positioning technologies are positioning technologies in which infrared or ultrasound is used. Specifically, an infrared or ultrasound transmitting apparatus may be installed on the target device (such as, the charging apparatus), and an infrared or ultrasound receiving apparatus may be installed on the movable device (such as, an electric device). The other type of positioning technologies are positioning technologies in which the laser technology is used. Specifically, a position of the target device may be recognized by a laser radar installed on the movable device. The following are prior art of the present disclosure:

- OPROMOLLA ROBERTO ET AL: "Pose Estimation for Spacecraft Relative Navigation Using Model-Based Algorithms", IEEE TRANSACTIONS ON AEROSPACE AND ELECTRONIC SYSTEMS, IEEE SERVICE CENTER, PISCATAWAY, NJ, US, vol. 53, no. 1, 1 February 2017 (2017-02-01), pages 431-447, ISSN: 0018-9251, DOI: 10.1109/TAES.2017.2650785; this document disclosing the performance assessment of innovative model-based algorithms developed for pose estimation of uncooperative targets by processing sparse three-dimensional point clouds;
- US Patent Application No. 16/995,500, which discloses a method for operating a robot, including capturing images of a workspace, comparing at least one object from the captured images to objects in an object dictionary, identifying a class to which the at least one object belongs using an object classification unit, instructing the robot to execute at least one action based on the object class identified, capturing movement data of the robot, and generating a planar representation of the workspace based on the captured images and the movement data, wherein the captured images indicate a position of the robot relative to objects within the workspace and the movement data indicates movement of the robot;
- US Patent Application No. 15/622,905, which discloses systems, methods, and apparatuses described herein are directed to performing segmentation on voxels representing three-dimensional data to identify static and dynamic objects. LIDAR data may be captured by a perception system for an autonomous vehicle and represented in a voxel space. Operations may include determining a drivable surface by parsing individual voxels to determine an orientation of a surface normal of a planar approximation of the voxelized data relative to a reference direction. Clustering techniques can be used to grow a ground plane including a plurality of locally flat voxels. Ground plane data can be set aside from the voxel space, and the remaining voxels can be clustered to determine objects. Voxel data can be analyzed over time to determine dynamic objects. Segmentation information associated with ground voxels, static object, and dynamic objects can be provided to a tracker and/or planner in conjunction with operating the autonomous vehicle;
- Chinese Patent Application Publication No. CN 112327842A, which discloses a method and a system for positioning a charging pile by a robot. The method comprises the following steps: calculating an ideal point cloud of feature information and a distance graph of the ideal point cloud; searching laser point clouds in the search range; searching the laser point clouds in the search range by adopting a sliding window so as to output a plurality of sections of candidate point clouds, and selecting the laser point cloud with the minimum alignment error as a charging pile point cloud; and aligning the charging pile point cloud with the ideal point cloud by using a singular value decomposition method, and calculating the pose of the charging pile. According to the method and the system for positioning the charging pile by the robot, the robot can rapidly and accurately align to the charging pile;
- Chinese Patent Application Publication No. CN 112363500A, which discloses an automatic recharging moving method and system. The automatic recharging moving method comprises the steps that a robot searches the feature information through a laser radar, and calculates the pose of a charging pile; and when the linear distance r between the robot and the charging pile is a fourth threshold value, a smooth track of the robot reaching the charging pile is calculated according to the pose of the charging pile, and the moving speed of the robot is calculated and output. According to the automatic recharging moving method and system, in the moving process of the robot, by adjusting the moving speed, it can be guaranteed that the robot is more stable in the process of moving close to the charging pile;

- Chinese Patent Application Publication No.CN 110824491A, which discloses a charging pile positioning method and device, computer equipment and a storage medium. The method comprises the steps of obtaining laser point cloud data; segmenting the laser point cloud data to obtain at least one point cloud data fragment; screening the at least one point cloud data fragment to obtain at least one piece of charging pile point cloud data; and registering the at least one charging pile point cloud data with charging pile section point cloud data to obtain the positional coordinates of the charging pile section. Therefore, the charging pile can be accurately positioned through the laser point cloud data and the charging pile section point cloud data, high positioning accuracy can be achieved even in a dynamic environment, the robustness is high, intervention of technicians is not needed, and the charging process is more automatic.

## SUMMARY

In the above positioning technologies in which the infrared or ultrasound is used, since an infrared or ultrasound sensor has a limited detection distance and accuracy, and under a condition that a distance to a charging apparatus is long, a position of a target device cannot be accurately determined, it is therefore necessary to adjust the posture continuously, and make multiple attempts to determine the position of the target device, which takes a relatively long time and is not efficient.

In the above positioning technologies in which the laser technology is used, a movable device may rapidly determine a position of the target device in a long distance region. However, under a condition that precise alignment is performed in a short distance region, a relative error of a laser radar (relative error = error / measured distance) increases. In this regard, it is known that there is a method of fitting a straight line to a laser point by a least square method and then performing feature matching with the target device, but this method is easily affected by a measurement error.

The present invention is defined by the appended claims. The present application provides a positioning control method and a positioning control apparatus capable of rapidly and accurately positioning a target device in both a long distance region and a short distance region. The present application further provides an autonomous charging control method and an autonomous charging control apparatus capable of rapidly and accurately identifying a charging apparatus.

An aspect of the present application provides a positioning control apparatus including: a distance determination component configured to determine whether a distance between a movable device and a target device is less than a first threshold; a long distance navigation component configured to guide, under a condition that the distance is not less than the first threshold, the movable device to move to the target device based on navigation; and a short distance accurate recognition component configured to recognize, under a condition that the distance is less than the first threshold, a position of the target device by a laser accurate recognition approach based on principal component analysis.

In the above positioning control apparatus, the short distance accurate recognition component is configured to determine, based on position information of a laser point formed by a laser radar installed on the movable device emitting laser light to the target device, a matching relationship between a position of the laser point and a shape of the target device by a principal component analysis, and determine a position of the target device with respect to the movable device based on the matching relationship.

In the above positioning control apparatus, the short distance accurate recognition component may include: a point set segmentation component configured to segment all acquired laser points into point sets each including a plurality of laser points; and a principal component analysis component configured to perform principal component analysis on each of the point sets, determine best matched positions of the laser points of the point sets with respect to the target device, and then determine a best matched position of a point set that best matches the target device as the position of the target device.

In the above positioning control apparatus, the point set segmentation component may be configured to exclude, under a condition that a distance between a laser point and an adjacent laser point is equal to or greater than a second threshold and equal to or less than a third threshold, the laser point from the point set.

In the above positioning control apparatus, the principal component analysis component may include: a principal component direction determination component configured to perform principal component analysis for each of the point sets to determine a principal component direction; a direction rotation component configured to rotate the point set to make the principal component direction be same as a direction of a feature template of the target device, wherein the feature template represents a standard shape of the target device; a best matched position determination component configured to determine, according to a matching relationship between an identification graphic region of the point set and an identification graphic region of the feature template, a best matched position of the point set with respect to the feature template; and a target device position determination component configured to determine, according to best matched positions of the point sets with respect to the feature template, the position of the target device.

In the above positioning control apparatus, the principal component direction determination component may include: a direction determination component configured to determine a direction of a feature vector corresponding to a greater one of two characteristic roots calculated according to a covariance matrix as the principal component direction, wherein the covariance matrix is calculated according to coordinates of the laser points in the point set, and the direction rotation component includes: a rotation angle calculation component configured to calculate a rotation angle and a rotation matrix according to feature vectors of the covariance matrix; and a rotation execution component configured to rotate the point set according to the rotation angle and the rotation matrix, so that the principal component direction of the point set is perpendicular to a current moving direction of the movable device.

In the above positioning control apparatus, the feature template and the point set each have an identification graphic region, the identification graphic region is a V-shaped region, and the best matched position determination component includes a V-shaped region matching component, and the V-shaped region matching component is configured to identify the V-shaped region in the feature template and the V-shaped region in the point set, and determine, under a condition that a matching relationship between the V-shaped region in the feature template and the V-shaped region in the point set is optimal, a position of the point set as the best matched position.

In the above positioning control apparatus, the best matched position determination component may be configured to determine the best matched position of the point set with respect to the feature template according to a mean-square error between the point set and the feature template; and the target device position determination component is configured to determine a best matched position of a point set with a minimum mean-square error as the position of the target device.

In the above positioning control apparatus, the feature template may include discrete sampling points obtained by sampling a projection of the target device on a scanning plane of the laser radar, the best matched position determination component may include a mean-square error calculation unit, and the mean-square error calculation unit is configured to calculate the mean-square error according to ordinates of the laser points of the point set and ordinates of corresponding sampling points of the feature template.

In the above positioning control apparatus, the best matched position determination component may further include: a minimum value calculation unit configured to calculate a minimum value of the mean-square error by using a gradient descent approach; and a matched position determination unit configured to determine, under a condition that the mean-square error is minimum, the matching relationship between the identification graphic region of the feature template and the identification graphic region of the point set is optimal, and determine a position of the point set as the best matched position.

In the above positioning control apparatus, the short distance accurate recognition component may further include: a coarse screening component configured to calculate a distance between a first laser point and a last laser point in the point set, and exclude the point set under a condition that a difference between the distance and a length of the target device along a laser scanning direction is greater than a fifth threshold.

Another aspect of the present application provides an autonomous charging control apparatus including the above positioning control apparatus, wherein the movable device is a movable electric device, the target device is a charging apparatus.

In the above autonomous charging control apparatus, the movable electric device is a robot.

Another aspect of the present application provides an autonomous charging system including: a movable electric device; a charging apparatus; a laser radar installed on the electric device; and the above autonomous charging control apparatus.

Another aspect of the present application provides a positioning control apparatus including: a memory; and a processor configured to execute a program stored in the memory to cause a computer to: determine whether a distance between a movable device and a target device is less than a first threshold; guide, under a condition that the distance is not less than the first threshold, the movable device to move to the target device based on navigation; and recognize, under a condition that the distance is less than the first threshold, a position of the target device by a laser accurate recognition approach based on principal component analysis.

Another aspect of the present application provides a positioning control method including: determining whether a distance between a movable device and a target device is less than a first threshold; guiding, under a condition that the distance is not less than the first threshold, the movable device to move to the target device based on navigation; and recognizing, under a condition that the distance is less than the first threshold, a position of the target device by a laser accurate recognition approach based on principal component analysis.

The positioning control method may further include: determining, based on position information of a laser point formed by a laser radar installed on the movable device emitting laser light to the target device, a matching relationship between a position of the laser point and a shape of the target device by principal component analysis, and determining a position of the target device with respect to the movable device based on the matching relationship.

In the above positioning control method, the laser accurate recognition approach may include: a segmentation step of segmenting all acquired laser points into point sets each including a plurality of laser points; and a principal component analysis step of performing principal component analysis on each of the point sets, determining best matched positions of the laser points of the point sets with respect to the target device, and then determining a best matched position of a point set that best matches the target device as the position of the target device.

In the above positioning control method, the segmentation step may include: excluding, under a condition that a distance between a laser point and an adjacent laser point is equal to or greater than a second threshold and equal to or less than a third threshold, the laser point from the point set.

In the above positioning control method, the principal component analysis step may include: performing principal component analysis for each of the point sets to determine a principal component direction; rotating the point set to make the principal component direction be same as a direction of a feature template of the target device, wherein the feature template represents a standard shape of the target device; determining, according to a matching relationship between an identification graphic region of the point set and an identification graphic region of the feature template, a best matched position of the point set with respect to the feature template; and determining, according to best matched positions of the point sets with respect to the feature template, the position of the target device.

In the above positioning control method, performing principal component analysis for each of the point sets to determine the principal component direction may include: determining a direction of a feature vector corresponding to a greater one of two characteristic roots calculated according to a covariance matrix as the principal component direction, wherein the covariance matrix is calculated according to coordinates of the laser points in the point set; rotating the point set to make the principal component direction be same as the direction of the feature template of the target device may include: calculating a rotation angle and a rotation matrix according to feature vectors of the covariance matrix; and rotating the point set according to the rotation angle and the rotation matrix, so that the principal component direction of the point set is perpendicular to a current moving direction of the movable device.

In the above positioning control method, the feature template and the point set each may have an identification graphic region, the identification graphic region is a V-shaped region, and determining, according to the matching relationship between the identification graphic region of the point set and the identification graphic region of the feature template, the best matched position of the point set with respect to the feature template may include: identifying the V-shaped region in the feature template and the V-shaped region in the point set, and determining, under a condition that a matching relationship between the V-shaped region in the feature template and the V-shaped region in the point set is optimal, a position of the point set as the best matched position.

In the above positioning control method, determining, according to the matching relationship between the identification graphic region of the point set and the identification graphic region of the feature template, the best matched position of the point set with respect to the feature template may include: calculating a mean-square error between the point set and the feature template; determining, according to the mean-square error, the best matched position of the point set with respect to the feature template, determining, according to the best matched positions of the point sets with respect to the feature template, the position of the target device may include: determining, for all point sets, a point set with a minimum mean-square error; determining a best matched position of the point set with the minimum mean-square error as the position of the target device.

In the above positioning control method, the feature template may include discrete sampling points obtained by sampling a projection of the target device on a scanning plane of the laser radar, and calculating the mean-square error between the point set and the feature template may include: calculating the mean-square error according to ordinates of the laser points of the point set and ordinates of corresponding sampling points of the feature template.

In the above positioning control method, determining, according to the mean-square error, the best matched position of the point set with respect to the feature template may include: calculating a minimum value of the mean-square error by using a gradient descent approach; and determining, under a condition that the mean-square error is minimum, the matching relationship between the identification graphic region of the feature template and the identification graphic region of the point set is optimal, and determining a position of the point set as the best matched position.

In the above positioning control method, after the segmentation step and before the principal component analysis step, the laser accurate recognition approach may further include: a coarse screening step of calculating a distance between a first laser point and a last laser point in the point set, and excluding the point set under a condition that a difference between the distance and a length of the target device along a laser scanning direction is greater than a fifth threshold.

Another aspect of the present application provides an autonomous charging control method including: the above positioning control method, wherein the movable device is a movable electric device, and the target device is a charging apparatus.

In the above autonomous charging control method, the movable electric device is a robot.

Another aspect of the present application provides a computer-readable storage medium storing a positioning control program, wherein the positioning control program causes a computer to: determine whether a distance between a movable device and a target device is less than a first threshold; guide, under a condition that the distance is not less than the first threshold, the movable device to move to the target device based on navigation; and recognize, under a condition that the distance is less than the first threshold, a position of the target device by a laser accurate recognition approach based on principal component analysis.

In the present application, by using the navigation to guide the movable device to move to the target device at a long distance, and performing the laser accurate recognition based on the principal component analysis at a short distance, the position of the target device may be positioned rapidly and accurately. Particularly, not only the position may be determined rapidly at the long distance, but also the positioning accuracy may be improved at the short distance. In the present application, compared with the prior art using the least square method or the like, performing the laser accurate recognition using the principal component analysis can further improve the positioning accuracy.

## BRIEF DESCRIPTION OF THE DRAWINGS

Fig. 1 is a schematic structural view showing an autonomous charging system according to the present disclosure;
Fig. 2 is a flowchart showing an example of a positioning control method according to the present implementation;
Fig. 3 is a flowchart schematically showing a specific embodiment of an accurate recognition approach;
Fig. 4 is a flowchart schematically showing a specific embodiment of a segmentation step S21;
Fig. 5 is a flowchart schematically showing a specific embodiment of a principal component analysis step S22;
Fig. 6 is a flowchart schematically showing a specific embodiment of a step S221;
Fig. 7 is a schematic view showing a difference between a principal component analysis approach of the present disclosure and a least square method as a comparative example;
Fig. 8 is a flowchart schematically showing a specific embodiment of a step S222;
Fig. 9 is a flowchart schematically showing a specific embodiment of steps S223 and S224;
Fig. 10 is a flowchart schematically showing a specific embodiment of a step S2232;
Fig. 11 is a flowchart schematically showing another specific embodiment of steps S223 and S224;
Fig. 12 is a flowchart schematically showing another specific embodiment of an accurate recognition approach;
Fig. 13 is a flowchart showing an example of an autonomous charging control method according to the present implementation;
Fig. 14 is a flowchart schematically showing a specific embodiment of a docking process step S60;
Fig. 15 is a schematic view schematically showing functional modules of an autonomous charging control apparatus 40 according to implementations of the present disclosure;
Fig. 16 is a schematic view schematically showing functional modules of a positioning control apparatus 40 according to implementations of the present disclosure;
Fig. 17 is a view schematically showing functional modules of a specific embodiment of a short distance accurate recognition component 42;
Fig. 18 is a view schematically showing functional modules of a specific embodiment of a principal component analysis component 422.

Reference signs

100: Autonomous charging system;
10: Electric device;
20: Charging apparatus;
30: Laser radar;
40: Autonomous charging control apparatus;
50: Positioning control apparatus;
60: Arrival position determination component;
70: Docking component;
80: Charging component;
41: Distance determination component;
42: Short distance accurate recognition component;
43: Long distance navigation component;
44: Point set segmentation component;
422: Principal component analysis component;
4221: Principal component direction determination component;

4222: Direction rotation component;
4223: Best matched position determination component;
4224: Target device position determination component.

## DETAILED DESCRIPTION

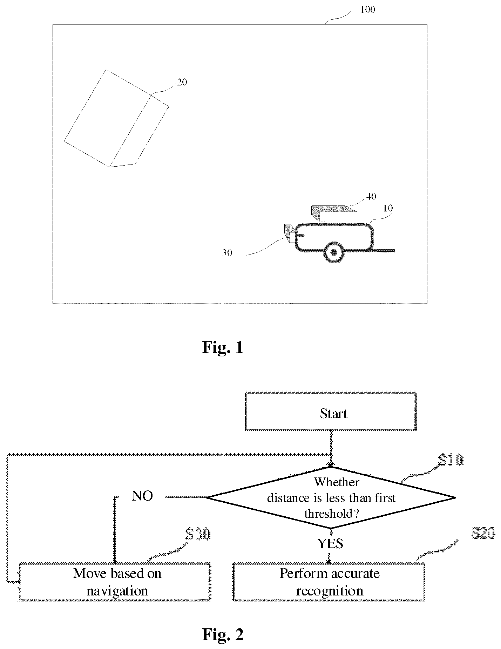

Fig. 1 is a schematic structural view showing an autonomous charging system according to the present disclosure.

As shown in Fig. 1, an autonomous charging system 100 includes: an electric device 10, a charging apparatus 20, a laser radar 30, and an autonomous charging control apparatus 40.

Here, the electric device 10 is a movable device that operates using electricity. For example, it may be a robot, sweeper, electric car, toy car, and the like.

The charging apparatus 20 is an apparatus capable of charging the electric device 10. For example, it may be a common charging apparatus such as a charging post. Here, the charging apparatus 20 may be fixed or movable.

The laser radar 30 is an instrument that measures a distance to a target object using laser light. The laser radar 30 includes a laser light emitting component that emits laser light and a laser light receiving component that receives laser light. Here, the laser radar 30 is installed on the electric device 10, emits laser light to the charging apparatus 20, and measures a distance from the electric device 10 to the charging apparatus 20. The installing position of the laser radar 30 on the electric device 10 is not particularly limited.

The autonomous charging control apparatus 40 is capable of controlling, based on position information of a laser point, the electric device 10 to move to a position that is docked with the charging apparatus 20 for charging. In addition, the autonomous charging control apparatus 40 may control, via the electric device 10 or directly, the charging apparatus 20 to charge. The autonomous charging control apparatus 40 may be installed on the electric device 10 as shown in Fig. 1, or may be physically separate from the electric device 10.

The autonomous charging control apparatus 40 includes a positioning control apparatus. The positioning control apparatus positions, based on the measured position information of the laser point, a position of the charging apparatus 20 with respect to the electric device 10, and guide the electric device 10 to move to the charging apparatus 20.

<First Implementation>

As a first implementation, an autonomous charging control method executed in the autonomous charging control apparatus 40 will be specifically described with reference to the drawings below.

First, a positioning control method executed in the positioning control apparatus included in the autonomous charging control apparatus 40 will be specifically described.

Although it is described above that the positioning control apparatus is included in the autonomous charging control apparatus 40, the positioning control apparatus and the positioning control method the present application may be independently applied in other application scenarios in addition to autonomous charging. Therefore, a scenario is considered only in which the positioning control apparatus positions the position of the target device with respect to the movable device, and guides the movable device to move to the target device. In order to facilitate an understanding of the flow of the positioning control method, an autonomous charging scenario in which the target device is the charging apparatus 20 and the movable device is the electric device 10 will be described below as an example.

Fig. 2 shows a flowchart of an example of the positioning control method according to the present implementation.

In step S10, a distance between the electric device 10 and the charging apparatus 20 is calculated, and it is determined whether the distance is less than a first threshold. Under a condition that the distance is less than the first threshold, the flow proceeds to step S20 for accurate recognition. Under a condition that the distance is greater than or equal to the first threshold, the flow proceeds to step S30 for performing a navigation-based movement.

The first threshold may be determined according to a measurement range, measurement accuracy, and the like of the laser radar 30. The first threshold is preferred to be 1.5m.

In step S20, a position of the charging apparatus 20 is accurately recognized by a laser accurate recognition approach based on principal component analysis.

In step S30, the position of the charging apparatus 20 is identified based on the navigation, and the electric device 10 is guided to move to the charging apparatus 20.

In step S30, a navigation approach is not particularly limited, and any following navigation approach may be used.

For example, a simultaneous localization and mapping (SLAM) navigation approach may be used, and SLAM refers to an approach in which the electric device 10 positions itself in an unknown environment by using an internal sensor (an encoder, a IMU, and the like) and an external sensor (a laser sensor or a visual sensor) it carries, and the electric device 10 builds, based on the positioning, an environment map incrementally by using environment information acquired by the external sensor. It is preferred to use a laser SLAM navigation, and under this condition, since laser light is used for regions in both the long distance and the short distance, it is possible to share components for emitting and receiving laser light with the laser radar 30 and the like, thereby simplifying the structure.

After each execution of step S30, and as the electric device 10 moves, a determination in step S10 is repeatedly performed until entering step S20.

According to the first implementation of the present disclosure, since the navigation is used for region in the long distance and the accurate recognition is used for the region in the short distance, both the speed and the accuracy of the positioning may be reached, thereby recognizing rapidly and accurately the charging apparatus.

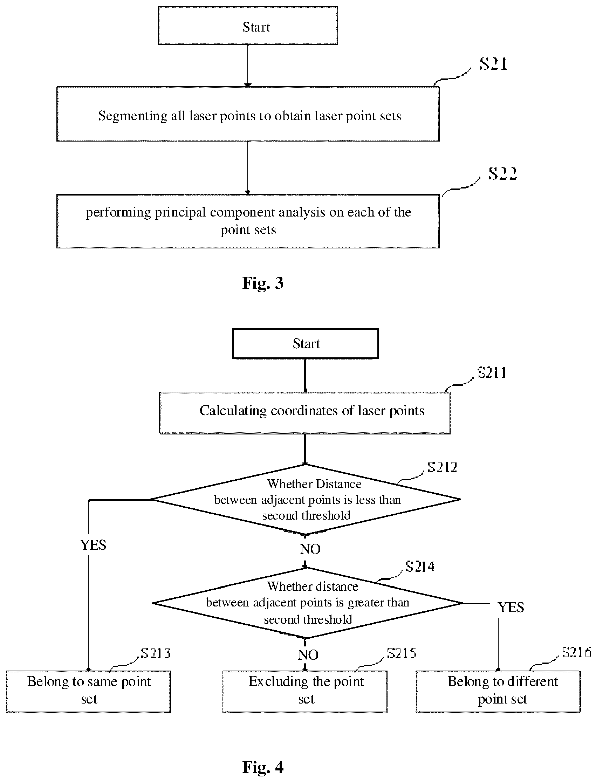

The accurate recognition approach in step S20 will be described specifically below. Fig. 3 is a flowchart schematically showing a specific embodiment of an accurate recognition approach. In the accurate recognition approach, a matching relationship between a position of the laser point and a shape of the target device is determined by principal component analysis based on position information of a laser point, so that a position of the charging apparatus 20 with respect to the electric device 10 is determined.

Specifically, as shown in Fig. 3, first, in step S21, all laser points are segmented to obtain point sets of the laser points. Here, step S21 is referred to as a segmentation step.

Here, the laser points are scanning position points formed by emitting laser light from the laser radar 30 installed on the electric device 10 to the charging apparatus 20.

Before step S21, there may also be a data acquisition step in which position information of a laser point formed by a laser radar 30 installed on the electric device 10 emitting laser light to the charging apparatus 20 is acquired.

Fig. 4 is a flowchart schematically showing a specific embodiment of the segmentation step S21.

As shown in Fig. 4, in step S211, coordinates of the laser points in the coordinate system of the electric device 10 are calculated. Herein, the coordinate system of the electric device 10 is a coordinate system in which a current position of the electric device 10 is the origin, a current moving direction of the electric device 10 is the x axis, and a direction perpendicular to the x axis is the y axis.

In step S212, it is determined whether a distance between a laser point and an adjacent laser point is less than a second threshold, and under a condition that the distance between the laser point and the adjacent laser point is less than the second threshold, the flow proceeds to step S213. The second threshold is used to sift a laser point that is relatively close to adjacent laser points, and such laser points are more likely to belong to the same point set.

Here, the second threshold may be determined as a value that varies according to a distance between a laser point and the laser radar 30. This is because an angle between adjacent laser beams emitted from the laser radar 30 is constant, under a condition that the laser radar 30 approaches the charging apparatus 20 as the electric device 10 moves, a distance between adjacent laser points projected on the surface of the charging apparatus 20 becomes shorter, and a second threshold for recognizing such adjacent laser points needs to be set relatively short.

In step S213, it is determined that the laser point and the adjacent laser point belong to the same point set.

Under a condition that it is determined in step S212 that the distance is greater than or equal to the second threshold, the flow proceeds to step S214.

In step S214, it is determined whether the distance between the laser point and the adjacent laser point is greater than a third threshold, and under a condition that the distance between the laser point and the adjacent laser point is greater than the third threshold, the flow proceeds to step S216. The third threshold is used to sift a laser point that is relatively far from adjacent laser points, and such laser points are more likely to belong to different point sets. Here, the third threshold is greater than the second threshold. Here, as the second threshold, the third threshold may be determined as a value that varies according to a distance between a laser point and the laser radar 30.

In step S216, it is determined that the laser point and the adjacent laser point belong to different point sets.

Under a condition that it is determined in step S214 that the distance is less than or equal to the third threshold, the flow proceeds to step S215.

In step S215, the laser point is excluded from the point set. This is because under a condition that a laser point with a distance between adjacent laser points being greater than or equal to the second threshold and less than or equal to the third threshold is more likely to be noise, and the laser point is excluded from the point set.

Specifically, it is assumed that a laser point $Point_i$ belongs to a point set $Segment_j$, a distance between $Point_i$ and an adjacent laser point $Point_{i+1}$ is $Dis_i$. Under a condition that $Dis_i <$ the second threshold, it is determined that $Point_{i+1}$ belongs to $Segment_j$. Under a condition that $Dis_i >$ third threshold, it is considered that $Point_{i+1}$ belongs to a new point set $Segment_{j+1}$. Under a condition that the second threshold $\leq Dis_i \leq$ the third threshold, it is considered that $Point_{i+1}$ is noise, and the laser point $Point_{i+1}$ is excluded.

The processing in steps S211, S212, and S214 are performed for each laser point to determine a point set to which the laser point belongs until the point set segmentation is completed for all laser points.

In addition, under a condition that the point sets are segmented, although a case in which the third threshold is greater than the second threshold has been described as an example, the third threshold may be equal to the second threshold, that is, one threshold may be used to distinguish whether the laser points belong to the same point set or different point sets. That is, step S215 may be omitted, and one threshold may be used for a determination in steps S212 and S214.

As described above, the laser points are segmented in the above manner, and the segmented point sets are used to represent point sets formed by the laser radar scanning the charging apparatus, so that the point sets that are more similar to a projection shape of the charging apparatus in a scanning plane of the laser radar can be recognized, thereby facilitating correct recognition of the position of the charging apparatus.

Returning to Fig. 3, in step S22, principal component analysis is performed on each of the point sets to determine best matched positions of the laser points of the point sets with respect to the charging apparatus 20, and then a best matched position of a point set that best matches the charging apparatus 20 is determined as the position of the charging apparatus 20. Here, the step S22 is referred to as a principal component analysis step.

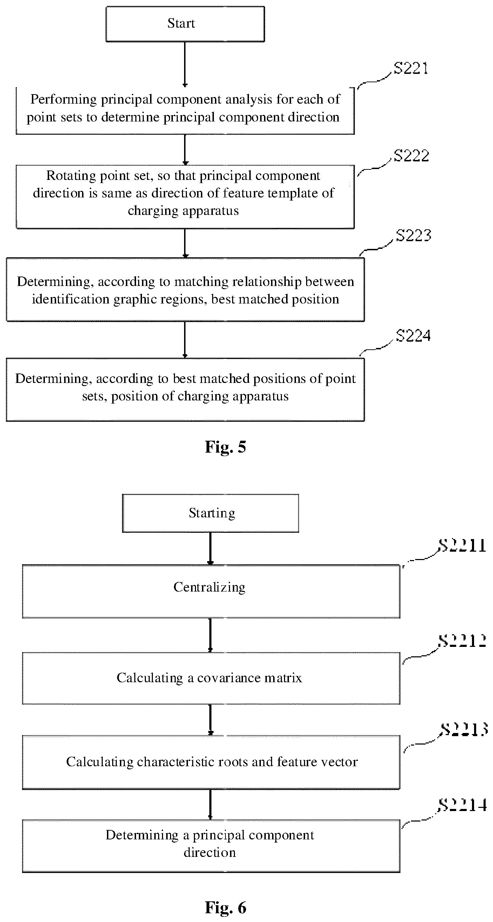

Fig. 5 is a flowchart schematically showing a specific embodiment of a principal component analysis step S22.

In step S221, a principal component analysis (PCA) is performed for each of the point sets segmented in step S21 to determine a principal component direction.

Fig. 6 is a flowchart schematically showing a specific embodiment of a principal component direction determination step S221.

In step S2211, coordinates of laser points in the point set are centralized.

Specifically, an average coordinate value $(\bar{x}, \bar{y})$ of the laser points in the point set is obtained, and the average coordinate value is subtracted from a coordinate $(x_i, y_i)$ of each of the laser points.

$$x_i = x_i - \bar{x} \qquad y_i = y_i - \bar{y}$$

In step S2212, a covariance matrix is calculated according to the centralized coordinate $(x_i, y_i)$ of each of the laser points in the point set.

Specifically, the centralized coordinate $(x_i, y_i)$ of each of the laser points is regarded as a column to form a matrix P, and a covariance matrix C is obtained by multiplying the matrix P and a transpose PT of the matrix. It is assumed that a point set contains n laser points, then a 2 * n matrix P is obtained, and each column of the matrix P is a $(x_i, y_i)$ coordinate of a laser point.

Here, it may be shown as follows:

$$P = \begin{pmatrix} x_1 & x_2 & \cdots \\ y_1 & y_2 & \cdots \end{pmatrix}$$

$$C = \begin{pmatrix} x_1 & x_2 & \cdots \\ y_1 & y_2 & \cdots \end{pmatrix} \begin{pmatrix} x_1 & y_1 \\ x_2 & y_2 \\ \cdots & \cdots \end{pmatrix}$$

In step S2213, a characteristic root is calculated for the covariance matrix C. Here, in step S2213, a feature vector may also be calculated at the same time for the covariance matrix C.

Since the covariance matrix C is a two-dimensional matrix, feature decomposition is performed for the covariance matrix C to obtain two characteristic roots and a corresponding feature vector.

In step S2214, a direction of a feature vector corresponding to a greater one of the two characteristic roots calculated according to the covariance matrix is determined as the principal component direction.

Here, the direction of the feature vector corresponding to the greater characteristic root is a direction along which the covariance of the point set of the laser points is maximum, that is, the direction of the feature vector corresponding to the greater characteristic root is the principal component direction of the point set.

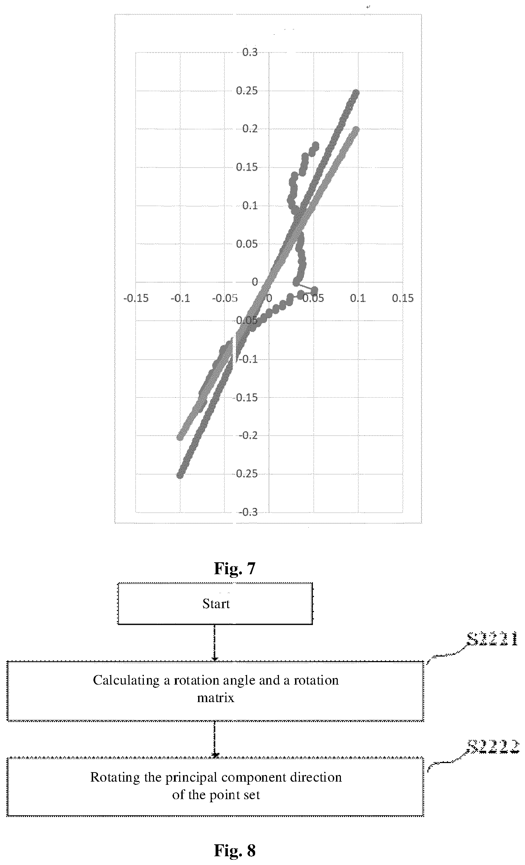

Fig. 7 is a schematic view showing a difference between a principal component analysis approach of the present disclosure and a least square method as a comparative example.

As shown in Fig. 7, discrete points are laser points obtained by the laser radar 30 scanning the charging apparatus 20, that is, the discrete points represent the point set of the laser points. The dark straight line is a straight line obtained by principal component analysis, that is, the dark straight line is the principal component direction. The light straight line is a straight line obtained by the least square method.

As may be seen from Fig. 7, the dark straight line is almost parallel to line segments representing two sides of a shape of the point set of the charging apparatus 20, while the light straight line has an angle with respect to line segments representing two sides of a shape of the point set of the charging apparatus 20.

Thus, by the principal component analysis, a direction of the charging apparatus 20 on the coordinate system of the electric device 10 can be determined more accurately.

Returning to Fig. 5, in step S222, a direction of the point set is rotated to make the principal component direction of the point set be the same as a direction of a feature template of the charging apparatus 20.

Here, the feature template represents a standard shape of the charging apparatus 20. The feature template includes discrete sampling points obtained by sampling a projection of the charging apparatus on the scanning plane of the laser radar. Specifically, the feature template shows a projection of a surface of the charging apparatus 20 facing the electric device 10 on the scanning plane of the laser radar. The feature template represents a scanning point without any measurement error which is obtained under a condition that the laser radar 30 scans the charging apparatus 20.

In particular, the point set may be rotated according to the rotation angle and the rotation matrix, so that the principal component direction of the point set is parallel to the y axis of the coordinate system of the electric device 10. This is because, in the coordinate system of the electric device 10, the x axis represents the current moving direction of the electric device 10, and the y axis represents a direction perpendicular to the x axis. And, the feature template shows the projection of the surface of the charging apparatus 20 facing the electric device 10 on the scanning plane of the laser radar, the surface of the charging apparatus 20 facing the electric device 10 is perpendicular to the moving direction of the electric device 10. Thus, the direction of the feature template is the direction of the y axis.

Fig. 8 is a flowchart schematically showing a specific embodiment of point set rotation step S222.

In step S2221, the rotation angle and the rotation matrix are calculated according to the feature vector calculated in step S2213.

In step S2222, the direction of the point set is rotated according to the rotation angle and the rotation matrix.

This is because, during actual charging, the electric device 10 often does not move directly to the charging apparatus 20, but moves at an angle with respect to the charging apparatus 20. Therefore, the rotation is performed, and the principal component direction of the point set is parallel to the y axis of the coordinate system of the electric device 10.

In contrast, the point set of the laser points is an actually measured point set of the laser points.

As shown in Fig. 7, under a condition that laser light emitted from the laser radar 30 scans the charging apparatus 20, a projection is formed in the scanning plane of the laser radar 30, and a shape of the projection has a V shape in the middle and two line segments located on the same straight line on two sides.

Thus, shapes of the feature template and the point set each also have a V shape in the middle and two line segments located on the same straight line on two sides.

Here, V-shaped regions may be referred to as identification graphic regions. Depending on shapes of the charging apparatus 20, the identification graphic regions may have different recognizable shapes.

After the direction of the point set is rotated in step S222, the V-shaped region of the rotated point set substantially matches the V-shaped region of the feature template.

As described above, by determining the principal component direction of the point set and rotating the point set, the principal component direction is same as the direction of the feature template, so that recognition errors caused by the principal component direction of the point set not parallel to the direction of the coordinate axis when the electric device 10 moves can be reduced, thereby making the recognition result more accurate.

Returning to Fig. 5, in step S223, a best matched position of the point set with respect to the feature template is determined according to a matching relationship between an identification graphic region of the point set and an identification graphic region of the feature template.

Under a condition that the feature template and the point set each have a V-shaped identification graphic region, in step S223, the V-shaped region in the feature template and the V-shaped region in the point set may be identified, and under a condition that a matching relationship between the V-shaped region in the feature template and the V-shaped region in the point set is optimal, a position of the point set is determined as the best matched position.

Then, in step S224, the position of the charging apparatus is determined according to the best matched position of each of the point sets.

Specifically, for all point sets, a position that best matches the feature template is determined, and a best matched position of a point set having a best matching degree with the feature template is determined as the position of the charging apparatus on the coordinate system of the electric device.

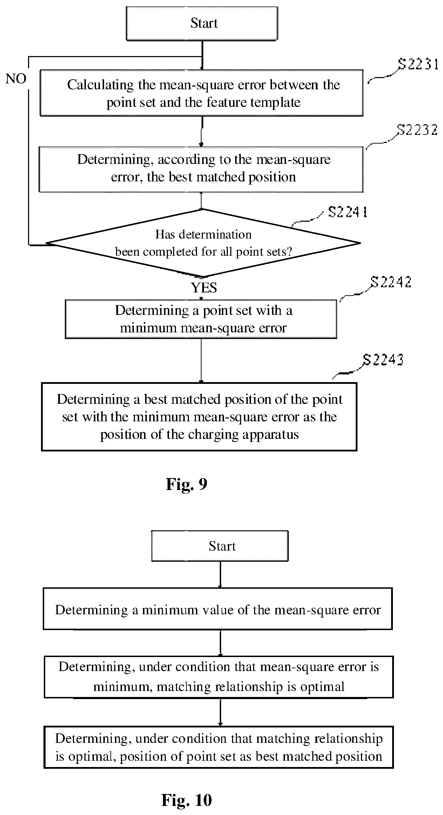

Fig. 9 is a flowchart schematically showing a specific embodiment of steps S223 and S224.

Specifically, step S223 may include steps S2231 to S2232, and step S224 may include steps S2241 to S2243.

As shown in Fig. 9, in step S2231, a mean-square error (MSE) between the point set and the feature template is calculated.

Specifically, an initial position $(X_0, Y_0)$ of a vertex of a standard V-shaped region of the feature template coincides with the maximum point of the x-coordinate in the V-shaped region of the point set. For each laser point of the V-shaped region in the point set, a y coordinate $Y_i$ of the standard V-shaped region of the feature template corresponding to the x coordinate of the laser point may be calculated, so that the mean-square error MSE may be calculated according to an ordinate yi of the laser point of the point set and an ordinate Yi of a corresponding sampling point in the feature template, which may be specifically calculated by the following formula.

$$MSE = \frac{1}{n}\sum_{i=1}^{n}(y_i - Y_i)^2 + \frac{1}{m}\sum_{i=1}^{m}(y_i - Y_i)^2$$

Herein, yi is an ordinate of each laser point of the point set, Yi is an ordinate of the corresponding sampling point of the feature template, n is the number of laser points corresponding to one of the sides of the V-shaped region of the feature template, that is, ordinates yi of the laser points are greater than or equal to the number of laser points Y0, and m is the number of laser points corresponding to the other of the sides of the V-shaped region of the feature template, that is, ordinates yi of the laser points is less than the number of laser points Y0. Here, the corresponding sampling point in the feature template refers to a sampling point with the abscissa that is equal to the abscissa of the laser point.

Since slopes of the two sides of the standard V-shape region are fixed, and a function of the two sides of the V-shape region may be determined as long as coordinates of vertices of the V-shape region are determined, $Y_j$ may be written into the form of a function $f(X_0, Y_0)$ with respect to $(X_0, Y_0)$. Therefore, the mean-square error may be calculated according to coordinates of the vertices of the identification graphic region of the feature template and ordinates of the laser points in the point set. That is, the mean-square error MSE may be calculated according to the following formula.

$$MSE = \frac{1}{n}\sum_{i=1}^{n}(y_i - f(X_0, Y_0))^2 + \frac{1}{m}\sum_{i=1}^{m}(y_i - f(X_0, Y_0))^2$$

In step S2232, the best matched position of the point set with respect to the feature template is determined according to the mean-square error MSE.

Fig. 10 is a flowchart schematically showing a specific embodiment of a step S2232.

In a first step, a minimum value of the mean-square error is determined. Here, the minimum value of the mean-square error may be calculated by using a gradient descent approach.

For example, the minimum value of the mean-square error may be calculated by the following steps:

(1) A partial derivative of the mean-square error with respect to $X_0, Y_0$ is calculated. $X_0$ or $Y_0$ is fixed, and under a condition that the other variable changes, there is only one best matched point, so there is only one point with a derivative of 0, and thus this is a convex optimization problem.

(2) Each time $X_0$ or $Y_0$ is fixed, and the other variable with a derivative of 0 is calculated, so that the minimum value of the mean-square error is continuously approximated. Under a condition that a difference between the calculated value of the $X_0, Y_0$ and the value of the $X_0, Y_0$ obtained in the last iteration does not exceed a threshold, the iteration stops. The threshold represents that the minimum value has converged, and it is preferred to be 0.005m.

In addition to the gradient descent approach, other approaches for calculating a minimum value may be used to calculate the minimum value of the mean-square error.

In the second step, under a condition that the mean-square error is minimum, it is determined that the matching relationship between the identification graphic region of the feature template and the identification graphic region of the point set, that is, the matching relationship between the V-shaped region in the feature template and the V-shaped region in the point set, is optimal.

In the third step, under a condition that the matching relationship between the identification graphic region of the feature template and the identification graphic region of the point set is optimal, the position of the point set is determined as the best matched position.

As shown in Fig. 9, in step S2241, it is determined whether the processing in steps S2231 to S2232 is completed for all point sets.

In other words, it is determined whether the processing in steps S2231 to S2232 have been performed for each of the point sets *Segment,* and the minimum value $E_{min}$ of the mean-square error has been calculated in each step.

Under a condition that the determination in step S2241 is "YES", the subsequent step S2242 is performed, and under a condition that there is still a point set on which the above steps S2231 to S2232 are not performed (the determination in step S2241 is "NO"), the flow returns to step S2231, and the above steps S2231 to S2232 are performed on the point set.

In step S2242, a point set with a minimum mean-square error is determined according to a calculation result of minimum values of the mean-square error for all point sets.

Specifically, by comparing a minimum value $E_{min}$ of the mean-square error of each of the point sets, a point set whose minimum value $E_{min}$ of the mean-square error is minimum among all point sets is determined as a point set $Segment_{best}$ with the minimum mean-square error. Under this condition, a minimum value of the minimum values $E_{min}$ of

the mean-square error of all point sets may be set to be $E_{min}^{min}$.

In step S2243, a best matched position of the point set with the minimum mean-square error is determined as the position of the charging apparatus 20.

In other words, the best matched position of the point set $Segment_{best}$ a minimum mean-square error value of $E_{min}^{min}$ may be determined as the position of the charging apparatus 20 on the coordinate system of the electric device 10.

As described above, the minimum value of the mean-square error is used to determine the matching relationship between the point set and the feature template, and in particular, the attention is paid on the matching relationship between the V-shaped identification graphic regions, so that the position of the charging apparatus 20 is determined, and such algorithm is fast in calculation and has highly accurate.

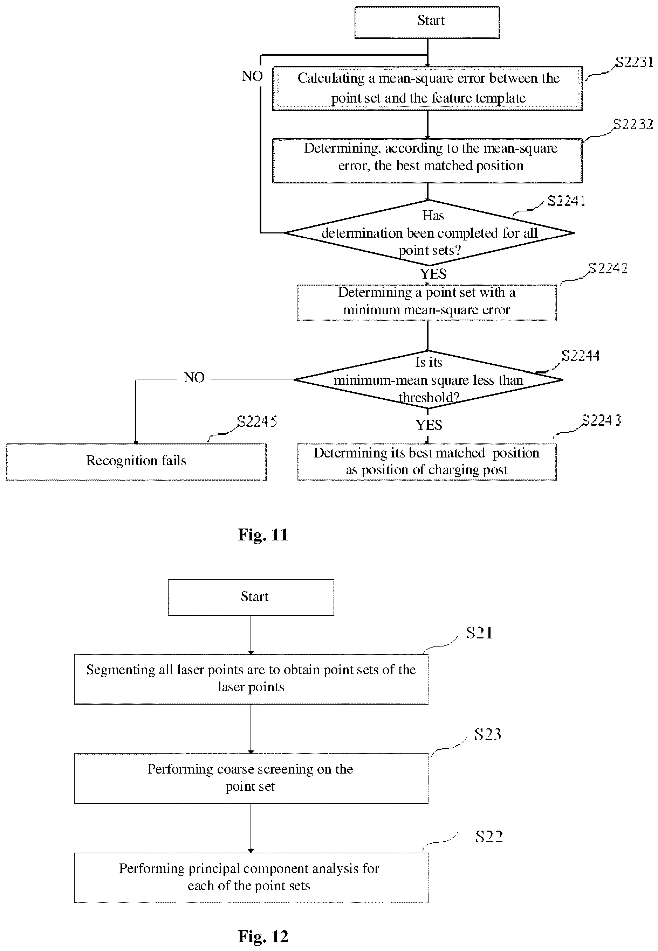

Fig. 11 is a flowchart schematically showing another specific embodiment of steps S223 and S224.

Here, as shown in Fig. 11, there may be steps S2244, S2245 after step S2242 in addition to step S2243.

In step S2244, it is determined whether the minimum value $E_{min}^{min}$ of the mean-square error of the point set with the minimum mean-square error is less than the fourth threshold. Under a condition that the minimum value $E_{min}^{min}$ of the mean-square error of the point set with the minimum mean-square error is less than the fourth threshold, the flow proceeds to step S2243 to determine the best matched position of the point set as the position of the charging apparatus, and under a condition that the minimum value $E_{min}^{min}$ of the mean-square error of the point set with the minimum mean-square error is not less than the fourth threshold, the flow proceeds to step S2245.

In step S2245, it is determined that charging apparatus 20 is not recognized. After step S2245, the recognition of the charging apparatus 20 may be resumed.

As described above, by re-searching the charging apparatus 20 under a condition that the $E_{min}^{min}$ is greater than or equal to the fourth threshold, the accuracy of recognition can be ensured.

In addition, as an optional embodiment, as shown in Fig. 12, a coarse screening step S23 may be included between the segmentation step S21 and the principal component analysis step S22 which were shown in Fig. 3.

In the coarse screening step S23, a distance between a first laser point and a last laser point in each of the point sets is calculated, and the point set is excluded under a condition that a difference between the distance and a length of the charging apparatus 20 along a laser scanning direction is greater than a fifth threshold.

For example, a distance $L_j$ between a first point $Po\ int_{start}$ and a last point $Point_{end}$ in a point set $Segment_j$ is calculated. Under this condition, the length of the charging apparatus 20 along the laser scanning direction is $L_{charger}$. Under a condition that $|L_j - L_{Charger}| >$ the fifth threshold, it means that a difference between the length of $Segment_j$ and the length of the charging apparatus 20 is exceedingly great, the point set $Segment_j$ is not likely to be the point set that represents the charging apparatus, so that the point set $Segment_j$ is excluded, and the processing in the subsequent step S22 is not performed on the point set any more.

In other words, before the principal component analysis step S22 is performed, the coarse screening is performed on the point sets segmented in step S21 to sift a point set which indicates that there is less possibility of having the charging apparatus, so that the calculation amount of the principal component analysis may be reduced, and the recognition speed may be increased.

Here, the fifth threshold may be appropriately set according to the length of the charging apparatus 20 along the laser scanning direction or the like.

After step S22, there may further be the following steps: controlling, according to the recognized position of the charging apparatus, the electric device to move to the charging apparatus.

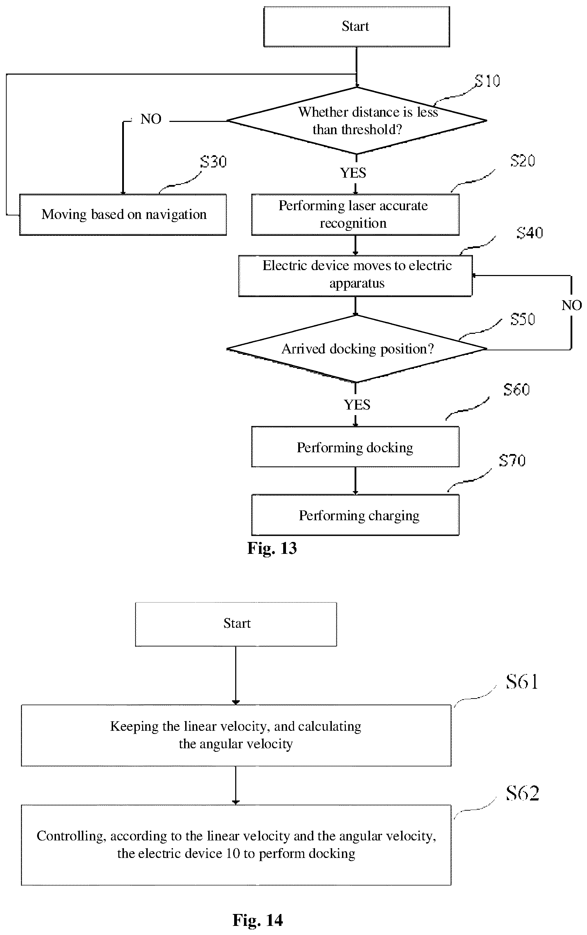

Next, steps of the autonomous charging control method other than the positioning control method will be described. Fig. 13 is a flowchart showing an example of an autonomous charging control method performed in the autonomous charging control apparatus 40. As shown in Fig. 13, after step S20 as shown in Fig. 2, specifically, after the principal component analysis step S22 as shown in Fig. 3 or Fig. 12, steps S40 to S70 may be further included.

In step S40, the electric device 10 moves to the charging apparatus 20 according to the direction and the position of the charging apparatus 20 on the coordinate system of the electric device 10.

Specifically, a linear velocity and an angular velocity of the electric device 10 are calculated according to the direction and the position of the charging apparatus 20 on the coordinate system of the electric device 10. And, the moving of the electric device 10 is controlled according to the linear velocity and the angular velocity of the electric device 10.

In step S50, it is determined whether the electric device 10 arrives a docking position.

The docking position is a position where the electric device 10 and the charging apparatus 20 can be docked so that the charging may be performed. Such docking position may have a certain range, that is, a range within a predetermined distance from the charging apparatus 20 may be determined as the docking position. In step S50, under a condition that it is determined the electric device 10 has arrived the docking position, the flow proceeds to step S60.

In step S60, the electric device 10 is controlled to perform a docking process.

Fig. 14 is a flowchart schematically showing a specific embodiment of a docking process step S60.

As shown in Fig. 14, in step S61. under a condition that the electric device 10 enters the docking process, the linear velocity of the electric device 10 keeps unchanged and the angular velocity is calculated by, for example, the PID algorithm.

In step S62, the electric device 10 is controlled to dock with the charging apparatus 20 according to the linear velocity and the angular velocity. For example, the linear velocity and the angular velocity of the electric device 10 are converted to a motor control speed of the electric device 10, and is sent to the motor, so that the electric device 10 is controlled to dock with the charging apparatus 20.

After the docking is performed, the electric device 10 and the charging apparatus 20 may be in a state in which power can be provided from the charging apparatus 20 to the electric device 10 through a wireless or wired connection.

Under a condition that it is determined in step S50 that the electric device 10 does not enter the docking position, the flow continues the processing in step S40 to move the electric device 10, so that the electric device 10 approaches the charging apparatus 20.

Next, in step S70, the charging apparatus 20 is controlled to charge the electric device 10.

As described above, in the autonomous charging control method of the present application, after the position and the direction of the charging apparatus 20 on the coordinate system of the electric device 10 are recognized through the accurate recognition approach, the electric device 10 is guided to move to the charging apparatus 20, dock with the charging apparatus 20, and to be charged, so that the electric device 10 can achieve a reliable and quick docking with the charging apparatus 20, and can be charged as quickly as possible.

<Second Implementation>

The autonomous charging control apparatus 40 will be described in detail below as the second implementation.

The autonomous charging control apparatus 40 may include a processor and a memory. The autonomous charging control apparatus 40 includes a positioning control apparatus 50, and the positioning control apparatus 50 may also include a processor and a memory. Here, the processor and the memory that the positioning control apparatus 50 includes may be the same as the processor and the memory that the autonomous charging control apparatus 40 includes. The autonomous charging control apparatus 40 or the positioning control apparatus 50 may be controlled by the processor executing an autonomous charging control program and a positioning control program stored in the memory, in which the autonomous charging control program may contain the positioning control program.

Herein, the processor may include a central processing unit (CPU), a graphics processing unit (GPU), and the like. The processor may contain a plurality of processors or may contain a multi-core processor sharing a part of the processing performed by the control apparatus, thereby reducing the processing load of a single processor or a single processing unit. Herein, the plurality of processors or the multi-core processor may respectively execute in parallel a part of the above processing, thereby increasing the operation speed.

The memory includes, for example, a read only memory (ROM) storing a program and various data, and a random access memory (RAM) used as an operating region of the CPU.

The autonomous charging control apparatus 40 may further include hardware such as a field programmable gate array (FPGA), an application specific integrated circuit (ASIC), and the like. Some or all of the processing performed by the autonomous charging control apparatus 40 may be implemented by the FPGA, the ASIC, or the like.

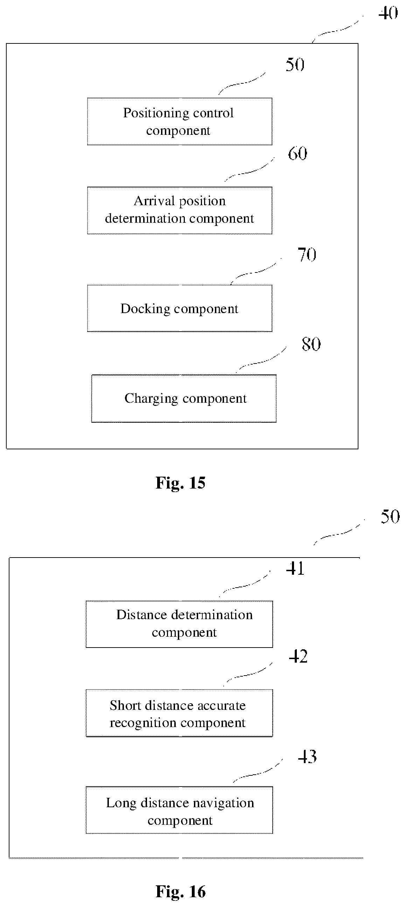

Fig. 15 is a schematic view schematically showing functional modules of an autonomous charging control apparatus 40 according to implementations of the present disclosure.

As shown in Fig. 15, the autonomous charging control apparatus 40 includes the positioning control apparatus 50, an arrival docking position determination component, a docking component, and a charging component. The arrival docking position determination component is configured to execute the processing in step S50, the docking component is configured to execute the processing in step S60, and the charging component is configured to execute the processing in step S70.

Fig. 16 is a schematic view showing functional modules of a positioning control apparatus 50 according to implementations of the present disclosure.

As shown in Fig. 16, the positioning control apparatus 50 includes a distance determination component 41, a short distance accurate recognition component 42, and a long distance navigation component 43.

The distance determination component 41 is configured to calculate a distance between the electric device 10 and the charging apparatus 20, and determine whether the distance is less than a first threshold. Under a condition that the distance is less than the first threshold, the short distance accurate recognition component 42 is configured to perform accurate recognition. Under a condition that the distance is equal to or greater than the first threshold, the long distance navigation component 43 is configured to perform a navigation-based movement. That is, the distance determination component 41 is configured to perform the processing in step S10, the short distance accurate recognition component 42 is configured to perform the processing in step S20, and the long distance navigation component 43 is configured to perform the processing in step S30.

Reference may be made to the first implementation for the details of the distance determination component 41, the short distance accurate recognition component 42, the long distance navigation component 43, the arrival docking position determination component, the docking component, and the charging component.

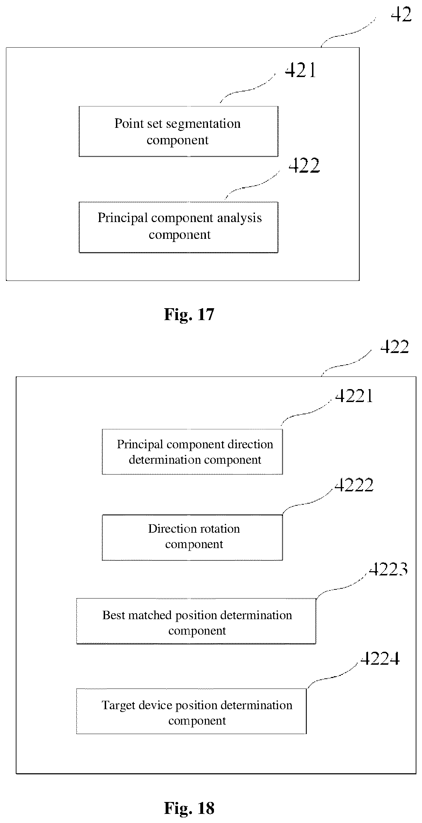

Herein, the short distance accurate recognition component 42 will be further described. Fig. 17 is a view schematically showing functional modules of a specific embodiment of a short distance accurate recognition component 42. As shown in Fig. 17, the short distance accurate recognition component 42 includes a point set segmentation component 421, and a principal component analysis component 422. The point set segmentation component 421 is configured to perform the segmentation step S21. The principal component analysis component 422 is configured to perform the processing in the principal component analysis step S22. The short distance accurate recognition component 42 may further include a coarse screening component configured to perform the coarse screening step S23. Reference may be made to the first embodiment for the details of the segmentation step S21, the principal component analysis step S22, and the coarse screening step S23.

The point set segmentation component 421 will be further described. The point set segmentation component 421 includes a coordinate calculation component configured to perform step S211 in Fig. 4, a same point set determination component configured to perform steps S212 to S213, and a different point set determination component configured to perform steps S214 to S216. In other words, the coordinate calculation component is configured to calculate a coordinate of a laser point in a coordinate system of the movable apparatus; under a condition that a distance between a laser point and an adjacent laser point is less than the second threshold, the same point set determination component considers that the laser point and the adjacent laser point belong to the same point set; under a condition that a distance between a laser point and an adjacent laser point is greater than the third threshold, the different point set determination component considers that the laser point and the adjacent laser point belong to different point sets, and the third threshold is greater than the second threshold. The coordinate system of the movable device is a coordinate system in which a current position of the movable device is the origin, a current moving direction of the movable device is the x axis, and a direction perpendicular to the x axis is the y-axis. The point set segmentation component 421 is configured to exclude, under a condition that a distance between a laser point and an adjacent laser point is equal to or greater than a second threshold and equal to or less than a third threshold, the laser point from the point set.

Herein, the principal component analysis component 422 will be further described. Fig. 18 is a view schematically showing functional modules of a specific embodiment of a principal component analysis component 422. As shown in Fig. 18, the principal component analysis component 422 includes a principal component direction determination component 4221, a direction rotation component 4222, a best matched position determination component 4223, and a target device position determination component 4224. The principal component direction determination component 4221 is configured to perform the processing in step S221 as shown in Fig. 5, the direction rotation component 4222 is configured to perform the processing in step S222, the best matched position determination component 4223 is configured to perform the processing in step S223, and the target device position determination component 4224 is configured to perform the processing in step S224.

In other words, the principal component direction determination component is configured to perform principal component analysis for each of the point sets to determine a principal component direction; the direction rotation component is configured to rotate the point set to make the principal component direction be the same as a direction of a feature template of the target device, wherein the feature template represents a standard shape of the target device; the best matched position determination component is configured to determine, according to a matching relationship between an identification graphic region of the point set and an identification graphic region of the feature template, a best matched position of the point set with respect to the feature template; and the target device position determination component is configured to determine, according to best matched positions of the point sets with respect to the feature template, the position of the target device. Herein, the best matched position determination component includes a V-shaped region matching component, and the V-shaped region matching component is configured to identify the V-shaped region in the feature template and the V-shaped region in the point set, and determine, under a condition that a matching relationship between the V-shaped region in the feature template and the V-shaped region in the point set is optimal, a position of the point set as the best matched position.

The principal component direction determination component 4221 will be further described. The principal component direction determination component 4221 may include a centralization component, a covariance matrix calculation component, a characteristic root calculation component, and a direction determination component. The centralization component is configured to perform the processing in step S2211, the covariance matrix calculation component is configured to perform the processing in step S2212, the characteristic root calculation component is configured to perform the processing in step S2213, and the direction determination component is configured to perform the processing in step S2214. Reference may be made to the first implementation for the details of steps S2211 to S2214. In other words, the principal component direction determination component includes: the centralization component configured to centralize coordinates of the laser points in the point set; the covariance matrix calculation component configured to calculate, according to the centralized coordinates of the laser points, a covariance matrix; the characteristic root calculation component configured to calculate a characteristic root for the covariance matrix; the direction determination component configured to determine a direction of a feature vector corresponding to a greater one of two characteristic roots calculated according to a covariance matrix as the principal component direction. The principal component direction determination component 4221 may further include a feature vector calculation component configured to calculate a feature vector for the covariance matrix. The centralization component may further include a unit configured to obtain an average coordinate value of the laser points in the point set, and subtract the average coordinate value from a coordinate of each of the laser points. The covariance matrix calculation component may further include a unit configured to regard a centralized x coordinate and a centralized y coordinate of each of the centralized laser points as a column to form a matrix, and obtain the covariance matrix by multiplying the matrix and a transpose of the matrix.

Herein, the direction rotation component will be further described. The direction rotation component may include a rotation angle calculation component configured to perform the processing in step S2221, and a rotation execution component configured to perform the processing in step S2222. The rotation angle calculation component is configured to calculate a rotation angle and a rotation matrix according to feature vectors; the rotation execution component is configured to rotate the point set according to the rotation angle and the rotation matrix, so that the principal component direction of the point set is parallel to the y axis of the coordinate system of the movable device.

Under a condition that the best matched position determination component and the target device position determination component are further described, the best matched position determination component is configured to determine the best matched position of the point set with respect to the feature template according to a mean-square error between the point set and the feature template, and the target device position determination component is configured to determine a best matched position of a point set with a minimum mean-square error as the position of the target device. More specifically, the best matched position determination component includes the mean-square error calculation unit configured to calculate the mean-square error according to ordinates of the laser points of the point set and ordinates of corresponding sampling points of the feature template, a minimum value calculation unit configured to calculate a minimum value of the mean-square error by using a gradient descent approach, and a matched position determination unit configured to determine, under a condition that the mean-square error is minimum, the matching relationship between the identification graphic region of the feature template and the identification graphic region of the point set is optimal, and determine a position of the point set as the best matched position.

As described above, in the second implementation, the processing performed in any step or any steps in the first implementation may be performed by corresponding functional modules.

Effects the same as those of the first implementation may be achieved in the second implementation.

In the implementation, although an example is given in which the target device is the charging apparatus, and the movable device is the robot (that is, the autonomous charging scenario is given as an example) to illustrate the positioning control method and the positioning control apparatus, the positioning control method and the positioning control apparatus of the present disclosure are not limited to the autonomous charging scenario, but may be applied to other scenarios in which it is necessary to determine a positional relationship between the movable device and the target device and control the moving of the movable device. For example, there may be an autonomous refueling scenario in which a refueling machine at a refueling station is used as the target device, and an autonomous vehicle is used as the movable device; alternatively, for example, there may be an autonomous processing scenario in which a mechanical or electronic processing device is used as the target device, and a robot or transporter carrying the workpiece is used as the movable device. In addition, the target device may be a device having a function of processing or interacting with the movable device as described above, or a device not having a specific function of processing or interacting with the movable device, or a simple target object which has a shape recognizable by the movable device and is applied to a scenario in which the movable device needs to move to the target device. For example, the scenario may be a scenario in which an autonomous vehicle moves to a particular building.

**Claims**

1.    A positioning control method, comprising:

determining (S10) whether a distance between a movable device (10) and a target device (20) is less than a first threshold;
guiding (S30), under a condition that the distance is not less than the first threshold, the movable device to move to the target device based on a navigation approach; and
recognizing (S20), under a condition that the distance is less than the first threshold, a position of the target device by a laser accurate recognition approach based on principal component analysis,
the positioning control method being **characterised by** the laser accurate recognition approach comprising:

a segmentation step of segmenting (S21) all acquired laser points into point sets each comprising a plurality of laser points, the laser points being formed by a laser radar (30) installed on the movable device emitting laser light to the target device; and

a principal component analysis step of performing (S22) principal component analysis on each of the point sets, determining best matched positions of the laser points of the point sets with respect to the target device, and then determining a best matched position of a point set that best matches the target device as the position of the target device,

the principal component analysis step (S22) comprises:

performing (S221) principal component analysis for each of the point sets to determine a principal component direction;

rotating (S222) the point set to make the principal component direction be same as a direction of a feature template of the target device, wherein the feature template represents a standard shape of the target device;

determining (S223), according to a matching relationship between an identification graphic region of the point set and an identification graphic region of the feature template, a best matched position of the point set with respect to the feature template; and

determining (S224), according to best matched positions of the point sets with respect to the feature template, the position of the target device.

2. The positioning control method according to claim 1, wherein

the segmentation step comprises:

excluding (S215), under a condition that a distance between a laser point and an adjacent laser point is equal to or greater than a second threshold and equal to or less than a third threshold, the laser point from the point set.

3. The positioning control method according to claim 1, wherein

performing (S221) principal component analysis for each of the point sets to determine the principal component direction comprises:

determining a direction of a feature vector corresponding to a greater one of two characteristic roots calculated (S2213) according to a covariance matrix as the principal component direction, wherein the covariance matrix is calculated (S2212) according to coordinates of the laser points in the point set;

rotating (S222) the point set to make the principal component direction be same as the direction of the feature template of the target device comprises:

calculating (S2221) a rotation angle and a rotation matrix according to feature vectors of the covariance matrix; and

rotating (S2222) the point set according to the rotation angle and the rotation matrix to make the principal component direction of the point set be perpendicular to a current moving direction of the movable device.

4. The positioning control method according to claim 1, wherein

the feature template and the point set each have an identification graphic region,

the identification graphic region is a V-shaped region, and

determining (S223), according to the matching relationship between the identification graphic region of the point set and the identification graphic region of the feature template, the best matched position of the point set with respect to the feature template comprises:

identifying the V-shaped region in the feature template and the V-shaped region in the point set, and determining, under a condition that a matching relationship between the V-shaped region in the feature template and the V-shaped region in the point set is a best matching relationship, a position of the point set as the best matched position.

5. The positioning control method according to claim 1, wherein

determining (S223), according to the matching relationship between the identification graphic region of the point set and the identification graphic region of the feature template, the best matched position of the point set with respect to the feature template comprises:

calculating (S2231) a mean-square error between the point set and the feature template;

determining (S2232), according to the mean-square error, the best matched position of the point set with respect to the feature template,

determining (S224), according to the best matched positions of the point sets with respect to the feature template, the position of the target device comprises:

determining (S2242), for all point sets, a point set with a minimum mean-square error;
determining (S2243) a best matched position of the point set with the minimum mean-square error as the position of the target device.

6. The positioning control method according to claim 5, wherein

the feature template comprises discrete sampling points obtained by sampling a projection of the target device on a scanning plane of the laser radar (30),
calculating (S2231) the mean-square error between the point set and the feature template comprises:
calculating the mean-square error according to ordinates of the laser points in the point set and ordinates of corresponding sampling points in the feature template.

7. The positioning control method according to claim 6, wherein
determining (S2232), according to the mean-square error, the best matched position of the point set with respect to the feature template comprises:

calculating a minimum value of the mean-square error by using a gradient descent approach; and
determining, under a condition that the mean-square error is minimum, the matching relationship between the identification graphic region of the feature template and the identification graphic region of the point set is a best matching relationship, and determining a position of the point set as the best matched position.

8. The positioning control method according to claim 1, wherein
after the segmentation step and before the principal component analysis step, the laser accurate recognition approach further comprises:
a coarse screening step (S23) of calculating a distance between a first laser point and a last laser point in the point set, and excluding the point set under a condition that a difference between the distance and a length of the target device along a laser scanning direction is greater than a fifth threshold.

9. An autonomous charging control method, comprising:

the positioning control method according to any of claims 1 to 8,
wherein the movable device is a movable electric device (10),
the target device is a charging apparatus (20).

10. The autonomous charging control method according to claim 9, wherein:
the movable electric device (10) is a robot.

11. A positioning control apparatus, comprising:

a memory; and
a processor configured to execute a program stored in the memory to cause a computer to implement the positioning control method according to any of claims 1 to 8.

12. A computer-readable storage medium storing a positioning control program, wherein the positioning control program causes a computer to implement the positioning control method according to any of claims 1 to 8.

**Patentansprüche**

1. Positionssteuerungsverfahren, umfassend:

Bestimmen (S10), ob ein Abstand zwischen einer beweglichen Vorrichtung (10) und einer Zielvorrichtung (20) kleiner als ein erster Schwellenwert ist;
Führen (S30), unter der Bedingung, dass der Abstand nicht kleiner als der erste Schwellenwert ist, der beweglichen Vorrichtung, sich auf der Grundlage eines Navigationsansatzes zur Zielvorrichtung zu bewegen;

und

Erkennen (S20), unter der Bedingung, dass der Abstand kleiner als der erste Schwellenwert ist, einer Position der Zielvorrichtung mittels eines laserpräzisen Erkennungsansatzes auf der Grundlage der Hauptkomponentenanalyse, wobei das Positionssteuerungsverfahren **dadurch gekennzeichnet ist, dass** der laserpräzise Erkennungsansatz Folgendes umfasst:

einen Segmentierungsschritt des Segmentierens (S21) sämtlicher erfasster Laserpunkte in Punktmengen, die jeweils eine Mehrzahl von Laserpunkten umfassen, wobei die Laserpunkte von einem auf der beweglichen Vorrichtung installierten Laserradar (30) gebildet werden, das Laserlicht zu der Zielvorrichtung emittiert; und

einen Hauptkomponentenanalyse-Schritt des Durchführens (S22) einer Hauptkomponentenanalyse für jede der Punktmengen, des Bestimmens von am besten übereinstimmenden Positionen der Laserpunkte der Punktmengen in Bezug auf die Zielvorrichtung und anschließend des Bestimmens einer am besten übereinstimmenden Position einer Punktmenge, die am besten mit der Zielvorrichtung übereinstimmt, als die Position der Zielvorrichtung;

wobei der Hauptkomponentenanalyse-Schritt (S22) umfasst:

Durchführen (S221) einer Hauptkomponentenanalyse für jede der Punktmengen zum Bestimmen einer Hauptkomponentenrichtung;

Drehen (S222) der Punktmenge, um die Hauptkomponentenrichtung mit einer Richtung einer Merkmalsvorlage der Zielvorrichtung in Übereinstimmung zu bringen, wobei die Merkmalsvorlage eine Standardform der Zielvorrichtung darstellt;

Bestimmen (S223) einer am besten übereinstimmenden Position der Punktmenge in Bezug auf die Merkmalsvorlage entsprechend einer Zuordnungsbeziehung zwischen einem Identifikationsgrafikbereich der Punktmenge und einem Identifikationsgrafikbereich der Merkmalsvorlage; und

Bestimmen (S224) der Position der Zielvorrichtung entsprechend den am besten übereinstimmenden Positionen der Punktmengen in Bezug auf die Merkmalsvorlage.

2. Positionssteuerungsverfahren nach Anspruch 1, wobei der Segmentierungsschritt umfasst:
Ausschließen (S215), unter der Bedingung, dass ein Abstand zwischen einem Laserpunkt und einem benachbarten Laserpunkt gleich oder größer als ein zweiter Schwellenwert und gleich oder kleiner als ein dritter Schwellenwert ist, des Laserpunkts aus der Punktmenge.

3. Positionssteuerungsverfahren nach Anspruch 1, wobei das Durchführen (S221) der Hauptkomponentenanalyse für jede der Punktmengen zum Bestimmen der Hauptkomponentenrichtung umfasst:

Bestimmen einer Richtung eines Eigenvektors, der einem größeren von zwei Eigenwerten entspricht, die gemäß einer Kovarianzmatrix berechnet (S2213) werden, als die Hauptkomponentenrichtung, wobei die Kovarianzmatrix gemäß Koordinaten der Laserpunkte in der Punktmenge berechnet (S2212) wird;

wobei das Drehen (S222) der Punktmenge, um die Hauptkomponentenrichtung mit der Richtung der Merkmalsvorlage der Zielvorrichtung in Übereinstimmung zu bringen, umfasst:

Berechnen (S2221) eines Drehwinkels und einer Drehmatrix gemäß Eigenvektoren der Kovarianzmatrix; und

Drehen (S2222) der Punktmenge gemäß dem Drehwinkel und der Drehmatrix, um die Hauptkomponentenrichtung der Punktmenge senkrecht zu einer aktuellen Bewegungsrichtung der beweglichen Vorrichtung zu machen.

4. Positionssteuerungsverfahren nach Anspruch 1, wobei

die Merkmalsvorlage und die Punktmenge jeweils einen Identifikationsgrafikbereich aufweisen;
der Identifikationsgrafikbereich ein V-förmiger Bereich ist; und
das Bestimmen (S223), entsprechend der Zuordnungsbeziehung zwischen dem Identifikationsgrafikbereich der Punktmenge und dem Identifikationsgrafikbereich der Merkmalsvorlage, der am besten übereinstimmenden Position der Punktmenge in Bezug auf die Merkmalsvorlage umfasst:

Identifizieren des V-förmigen Bereichs in der Merkmalsvorlage und des V-förmigen Bereichs in der Punktmenge; und

Bestimmen, unter der Bedingung, dass eine Zuordnungsbeziehung zwischen dem V-förmigen Bereich in der Merkmalsvorlage und dem V-förmigen Bereich in der Punktmenge eine beste Übereinstimmungsbeziehung ist, einer Position der Punktmenge als die am besten übereinstimmende Position.

5. Positionssteuerungsverfahren nach Anspruch 1, wobei
das Bestimmen (S223), entsprechend der Zuordnungsbeziehung zwischen dem Identifikationsgrafikbereich der Punktmenge und dem Identifikationsgrafikbereich der Merkmalsvorlage, der am besten übereinstimmenden Position der Punktmenge in Bezug auf die Merkmalsvorlage umfasst:

Berechnen (S2231) eines mittleren quadratischen Fehlers zwischen der Punktmenge und der Merkmalsvorlage; und

Bestimmen (S2232), entsprechend dem mittleren quadratischen Fehler, der am besten übereinstimmenden Position der Punktmenge in Bezug auf die Merkmalsvorlage;

wobei das Bestimmen (S224), entsprechend den am besten übereinstimmenden Positionen der Punktmengen in Bezug auf die Merkmalsvorlage, der Position der Zielvorrichtung umfasst:

Bestimmen (S2242), für alle Punktmengen, einer Punktmenge mit einem minimalen mittleren quadratischen Fehler; und

Bestimmen (S2243) einer am besten übereinstimmenden Position der Punktmenge mit dem minimalen mittleren quadratischen Fehler als die Position der Zielvorrichtung.

6. Positionssteuerungsverfahren nach Anspruch 5, wobei

die Merkmalsvorlage diskrete Abtastpunkte umfasst, die durch Abtasten einer Projektion der Zielvorrichtung auf einer Abtastebene des Laserradars (30) erhalten werden; und

das Berechnen (S2231) des mittleren quadratischen Fehlers zwischen der Punktmenge und der Merkmalsvorlage umfasst:

Berechnen des mittleren quadratischen Fehlers entsprechend Ordinaten der Laserpunkte in der Punktmenge und Ordinaten entsprechender Abtastpunkte in der Merkmalsvorlage.

7. Positionssteuerungsverfahren nach Anspruch 6, wobei
das Bestimmen (S2232), entsprechend dem mittleren quadratischen Fehler, der am besten übereinstimmenden Position der Punktmenge in Bezug auf die Merkmalsvorlage umfasst:

Berechnen eines Minimalwerts des mittleren quadratischen Fehlers unter Verwendung eines Gradientenabstiegsansatzes; und

Bestimmen, unter der Bedingung, dass der mittlere quadratische Fehler minimal ist, dass die Zuordnungsbeziehung zwischen dem Identifikationsgrafikbereich der Merkmalsvorlage und dem Identifikationsgrafikbereich der Punktmenge eine beste Übereinstimmungsbeziehung ist, und Bestimmen einer Position der Punktmenge als die am besten übereinstimmende Position.

8. Positionssteuerungsverfahren nach Anspruch 1, wobei
nach dem Segmentierungsschritt und vor dem Hauptkomponentenanalyse-Schritt der laserpräzise Erkennungsansatz ferner umfasst:
einen Grobfilterungsschritt (S23) des Berechnens eines Abstands zwischen einem ersten Laserpunkt und einem letzten Laserpunkt in der Punktmenge und des Ausschließens der Punktmenge unter der Bedingung, dass eine Differenz zwischen dem Abstand und einer Länge der Zielvorrichtung entlang einer Laserabtastrichtung größer als ein fünfter Schwellenwert ist.

9. Autonomes Lade-Steuerungsverfahren, umfassend:

das Positionssteuerungsverfahren nach einem der Ansprüche 1 bis 8,
wobei die bewegliche Vorrichtung eine bewegliche elektrische Vorrichtung (10) ist; und
die Zielvorrichtung eine Ladevorrichtung (20) ist.

10. Autonomes Lade-Steuerungsverfahren nach Anspruch 9, wobei
die bewegliche elektrische Vorrichtung (10) ein Roboter ist.

11. Positionssteuerungsvorrichtung, umfassend:

    einen Speicher; und
    einen Prozessor, der dazu ausgestaltet ist, ein in dem Speicher gespeichertes Programm auszuführen, um einen Computer zu veranlassen, das Positionssteuerungsverfahren nach einem der Ansprüche 1 bis 8 auszuführen.

12. Computerlesbares Speichermedium, das ein Positionssteuerungsprogramm speichert, wobei das Positionssteuerungsprogramm einen Computer dazu veranlasst, das Positionssteuerungsverfahren nach einem der Ansprüche 1 bis 8 auszuführen.

**Revendications**

1. Procédé de commande de positionnement, comprenant :

    le fait de déterminer (S10) si oui ou non une distance entre un dispositif mobile (10) et un dispositif cible (20) est inférieure à un premier seuil ;
    le guidage (S30), dans une condition où la distance n'est pas inférieure au premier seuil, du dispositif mobile pour qu'il se déplace vers le dispositif cible sur la base d'une approche de navigation ; et
    la reconnaissance (S20), dans une condition où la distance est inférieure au premier seuil, d'une position du dispositif cible par une approche de reconnaissance exacte au laser sur la base d'une analyse en composantes principales,
    le procédé de commande de positionnement étant **caractérisé en ce que** l'approche de reconnaissance exacte au laser comprend :

        une étape de segmentation qui segmente (S21) tous les points laser acquis en des ensembles de points comprenant chacun une pluralité de points laser, les points laser étant formés par un laser-radar (30) installé sur le dispositif mobile émettant une lumière laser vers le dispositif cible ; et
        une étape d'analyse en composantes principales qui réalise (S22) une analyse en composantes principales sur chacun des ensembles de points, détermine des positions les mieux appariées des points laser des ensembles de points par rapport au dispositif cible, puis détermine une position la mieux appariée d'un ensemble de points qui s'apparie au mieux au dispositif cible en tant que position du dispositif cible,
        l'étape d'analyse en composantes principales (S22) comprend :

            la réalisation (S221) d'une analyse en composantes principales pour chacun des ensembles de points afin de déterminer une direction de composante principale ;
            la rotation (S222) de l'ensemble de points pour amener la direction de composante principale à être la même qu'une direction d'un modèle de caractéristiques du dispositif cible, dans lequel le modèle de caractéristiques représente une forme standard du dispositif cible ;
            la détermination (S223), en fonction d'une relation d'appariement entre une région graphique d'identification de l'ensemble de points et une région graphique d'identification du modèle de caractéristiques, d'une position la mieux appariée de l'ensemble de points par rapport au modèle de caractéristiques ; et
            la détermination (S224), en fonction de positions les mieux appariées des ensembles de points par rapport au modèle de caractéristiques, de la position du dispositif cible.

2. Procédé de commande de positionnement selon la revendication 1, dans lequel l'étape de segmentation comprend :
    l'exclusion (S215), dans une condition où une distance entre un point laser et un point laser adjacent est supérieure ou égale à un deuxième seuil et inférieure ou égale à un troisième seuil, du point laser de l'ensemble de points.

3. Procédé de commande de positionnement selon la revendication 1, dans lequel la réalisation (S221) d'une analyse en composantes principales pour chacun des ensembles de points afin de déterminer la direction de composante principale comprend :

    la détermination d'une direction d'un vecteur propre correspondant à une valeur propre la plus grande parmi deux valeurs propres calculées (S2213) en fonction d'une matrice de covariance en tant que direction de composante principale, dans lequel la matrice de covariance est calculée (S2212) en fonction de coordonnées des points laser dans l'ensemble de points ;

la rotation (S222) de l'ensemble de points pour amener la direction de composante principale à être la même que la direction du modèle de caractéristiques du dispositif cible comprend :

le calcul (S2221) d'un angle de rotation et d'une matrice de rotation en fonction de vecteurs propres de la matrice de covariance ; et
la rotation (S2222) de l'ensemble de points en fonction de l'angle de rotation et de la matrice de rotation pour amener la direction de composante principale de l'ensemble de points à être perpendiculaire à une direction de déplacement en cours du dispositif mobile.

4.  Procédé de commande de positionnement selon la revendication 1, dans lequel

le modèle de caractéristiques et l'ensemble de points présentent chacun une région graphique d'identification, la région graphique d'identification est une région en forme de V, et
la détermination (S223), en fonction de la relation d'appariement entre la région graphique d'identification de l'ensemble de points et la région graphique d'identification du modèle de caractéristiques, d'une position la mieux appariée de l'ensemble de points par rapport au modèle de caractéristiques comprend :
l'identification de la région en forme de V dans le modèle de caractéristiques et de la région en forme de V dans l'ensemble de points, et la détermination, dans une condition où une relation d'appariement entre la région en forme de V dans le modèle de caractéristiques et la région en forme de V dans l'ensemble de points est une relation d'appariement optimale, d'une position de l'ensemble de points en tant que position la mieux appariée.

5.  Procédé de commande de positionnement selon la revendication 1, dans lequel
la détermination (S223), en fonction de la relation d'appariement entre la région graphique d'identification de l'ensemble de points et la région graphique d'identification du modèle de caractéristiques, de la position la mieux appariée de l'ensemble de points par rapport au modèle de caractéristiques comprend :

le calcul (S2231) d'une erreur quadratique moyenne entre l'ensemble de points et le modèle de caractéristiques ;
la détermination (S2232), en fonction de l'erreur quadratique moyenne, de la position la mieux appariée de l'ensemble de points par rapport au modèle de caractéristiques,
la détermination (S224), en fonction des positions les mieux appariées des ensembles de points par rapport au modèle de caractéristiques, de la position du dispositif cible comprend :

la détermination (S2242), pour tous les ensembles de points, d'un ensemble de points avec une erreur quadratique moyenne minimale ;
la détermination (S2243) d'une position la mieux appariée de l'ensemble de points avec l'erreur quadratique moyenne minimale en tant que position du dispositif cible.

6.  Procédé de commande de positionnement selon la revendication 5, dans lequel

le modèle de caractéristiques comprend des points d'échantillonnage discrets obtenus en échantillonnant une projection du dispositif cible sur un plan de balayage du laser-radar (30),
le calcul (S2231) de l'erreur quadratique moyenne entre l'ensemble de points et le modèle de caractéristiques comprend :
le calcul de l'erreur quadratique moyenne en fonction d'ordonnées des points laser dans l'ensemble de points et d'ordonnées de points d'échantillonnage correspondants dans le modèle de caractéristiques.

7.  Procédé de commande de positionnement selon la revendication 6, dans lequel
la détermination (S2232), en fonction de l'erreur quadratique moyenne, de la position la mieux appariée de l'ensemble de points par rapport au modèle de caractéristiques comprend :

le calcul d'une valeur minimale de l'erreur quadratique moyenne à l'aide d'une approche de descente de gradient ; et
le fait de déterminer, dans une condition où l'erreur quadratique moyenne est minimale, que la relation d'appariement entre la région graphique d'identification du modèle de caractéristiques et la région graphique d'identification de l'ensemble de points est une relation d'appariement optimale, et le fait de déterminer une position de l'ensemble de points en tant que position la mieux appariée.

8.  Procédé de commande de positionnement selon la revendication 1, dans lequel

après l'étape de segmentation et avant l'étape d'analyse en composantes principales, l'approche de reconnaissance exacte au laser comprend en outre :
une étape de criblage grossier (S23) qui calcule une distance entre un premier point laser et un dernier point laser dans l'ensemble de points, et exclut l'ensemble de points dans une condition où une différence entre la distance et une longueur du dispositif cible dans une direction de balayage laser est supérieure à un cinquième seuil.

9. Procédé de commande de recharge autonome, comprenant :

le procédé de commande de positionnement selon l'une quelconque des revendications 1 à 8,
dans lequel le dispositif mobile est un dispositif électrique mobile (10),
le dispositif cible est un dispositif de recharge (20).

10. Procédé de commande de recharge autonome selon la revendication 9, dans lequel
le dispositif électrique mobile (10) est un robot.

11. Appareil de commande de positionnement, comprenant :

une mémoire ; et
un processeur configuré pour exécuter un programme stocké dans la mémoire afin d'amener un ordinateur à mettre en œuvre le procédé de commande de positionnement selon l'une quelconque des revendications 1 à 8.

12. Support de stockage lisible par ordinateur stockant un programme de commande de positionnement, dans lequel le programme de commande de positionnement amène un ordinateur à mettre en œuvre le procédé de commande de positionnement selon l'une quelconque des revendications 1 à 8.

**Fig. 1**

**Fig. 2**

Start

S21

Segmenting all laser points to obtain laser point sets

S22

performing principal component analysis on each of the point sets

**Fig. 3**

Start

S211

Calculating coordinates of laser points

S212

Whether Distance between adjacent points is less than second threshold

YES

NO

S214

Whether distance between adjacent points is greater than second threshold

YES

S213

NO

S215

S216

Belong to same point set

Excluding the point set

Belong to different point set

**Fig. 4**

```
         ┌─────────────────────┐
         │       Start         │
         └─────────────────────┘
                    │
                    ▼
┌──────────────────────────────────────────┐  ╱S221
│ Performing principal component analysis   │
│ for each of point sets to determine       │
│ principal component direction             │
└──────────────────────────────────────────┘
                    │
                    ▼
┌──────────────────────────────────────────┐  ╱S222
│ Rotating point set, so that principal     │
│ component direction is same as direction  │
│ of feature template of charging apparatus │
└──────────────────────────────────────────┘
                    │
                    ▼
┌──────────────────────────────────────────┐  ╱S223
│ Determining, according to matching        │
│ relationship between identification       │
│ graphic regions, best matched position    │
└──────────────────────────────────────────┘
                    │
                    ▼
┌──────────────────────────────────────────┐  ╱S224
│ Determining, according to best matched    │
│ positions of point sets, position of      │
│ charging apparatus                        │
└──────────────────────────────────────────┘
```

**Fig. 5**

```
         ┌─────────────────────┐
         │      Starting       │
         └─────────────────────┘
                    │
                    ▼
┌──────────────────────────────────────────┐  ╱S2211
│              Centralizing                 │
└──────────────────────────────────────────┘
                    │
                    ▼
┌──────────────────────────────────────────┐  ╱S2212
│        Calculating a covariance matrix    │
└──────────────────────────────────────────┘
                    │
                    ▼
┌──────────────────────────────────────────┐  ╱S2213
│   Calculating characteristic roots and    │
│              feature vector               │
└──────────────────────────────────────────┘
                    │
                    ▼
┌──────────────────────────────────────────┐  ╱S2214
│     Determining a principal component     │
│               direction                   │
└──────────────────────────────────────────┘
```

**Fig. 6**

**Fig. 7**

```
┌─────────────────────────────────────┐
│                 Start                │
└─────────────────────────────────────┘
                    │
                    ▼                         S1221
┌─────────────────────────────────────┐
│ Calculating a rotation angle and a rotation │
│                matrix                │
└─────────────────────────────────────┘
                    │
                    ▼                         S1222
┌─────────────────────────────────────┐
│ Rotating the principal component direction │
│            of the point set          │
└─────────────────────────────────────┘
```

**Fig. 8**

Start

Calculating the mean-square error between the
point set and the feature template — S2231

Determining, according to the mean-square
error, the best matched position — S2232

Has determination
been completed for all point sets? — S2241

NO

YES

Determining a point set with a
minimum mean-square error — S2242

Determining a best matched position of the point
set with the minimum mean-square error as the
position of the charging apparatus — S2243

**Fig. 9**

Start

Determining a minimum value of the mean-square error

Determining, under condition that mean-square error is
minimum, matching relationship is optimal

Determining, under condition that matching relationship
is optimal, position of point set as best matched position

**Fig. 10**

Start

*S2231*

NO | Calculating a mean-square error between the point set and the feature template

*S2232*

Determining, according to the mean-square error, the best matched position

*S2241*

Has determination been completed for all point sets?

YES

*S2242*

Determining a point set with a minimum mean-square error

Is its minimum-mean square less than threshold?

*S2244*

NO

*S2245*

YES

*S2243*

Recognition fails

Determining its best matched position as position of charging post

**Fig. 11**

Start

*S21*

Segmenting all laser points are to obtain point sets of the laser points

*S23*

Performing coarse screening on the point set

*S22*

Performing principal component analysis for each of the point sets

**Fig. 12**

Start

*S10*

Whether distance is less than threshold?

NO

*S30*

YES

*S20*

Moving based on navigation

Performing laser accurate recognition

*S40*

Electric device moves to electric apparatus

NO

*S50*

Arrived docking position?

YES

*S60*

Performing docking

*S70*

Performing charging

**Fig. 13**

Start

*S61*

Keeping the linear velocity, and calculating the angular velocity

*S62*

Controlling, according to the linear velocity and the angular velocity, the electric device 10 to perform docking

**Fig. 14**

40

Positioning control
component — 50

Arrival position
determination component — 60

Docking component — 70

Charging component — 80

**Fig. 15**

50

Distance determination
component — 41

Short distance accurate
recognition component — 42

Long distance navigation
component — 43

**Fig. 16**

42

421

Point set segmentation
component

422

Principal component analysis
component

**Fig. 17**

422

4221

Principal component direction
determination component

4222

Direction rotation
component

4223

Best matched position determination
component

4224

Target device position determination
component

**Fig. 18**

**REFERENCES CITED IN THE DESCRIPTION**

**Patent documents cited in the description**

- US 995500
- US 622905
- CN 112327842 A
- CN 112363500 A
- CN 110824491 A

**Non-patent literature cited in the description**

- **OPROMOLLA ROBERTO et al.** *IEEE TRANSACTIONS ON AEROSPACE AND ELECTRONIC SYSTEMS, IEEE SERVICE CENTER, PISCATAWAY*, 01 February 2017, vol. 53 (1), ISSN 0018-9251, 431-447